# EUROPÄISCHE PATENTSCHRIFT

(11) **EP 3 030 394 B1**
(45) Veröffentlichungstag und Bekanntmachung des Hinweises auf die Patenterteilung: **30.08.2017**
(21) Anmeldenummer: 14741552.5
(22) Anmeldetag: 15.07.2014
(51) Int. Cl.: B29C 31/08, B29C 70/54, B30B 15/30, B65G 54/00

(54) **NAHFELDLEVITATION**
NEAR-FIELD LEVITATION
LÉVITATION À CHAMP PROCHE

(30) Priorität: 07.08.2013 DE 102013215504
(43) Veröffentlichungstag der Anmeldung: 15.06.2016
(73) Patentinhaber: Bayerische Motoren Werke Aktiengesellschaft, 80809 München (DE)
(72) Erfinder: KLEINPETER, Gerhard, 84184 Tiefenbach (DE)
(86) Internationale Anmeldenummer: PCT/EP2014/065089
(87) Internationale Veröffentlichungsnummer: WO 2015/018609

(56) Entgegenhaltungen:
- EP-A2- 0 396 941
- WO-A1-00/61475
- JP-A- H06 285 889
- US-A- 5 810 155
- US-B2- 7 354 540

## Beschreibung

Die Erfindung betrifft ein Verfahren zum Handhaben einer einem Presswerkzeug zuzuführenden Faseranordnung, wobei die Faseranordnung vor ihrer Zuführung zu dem Presswerkzeug zumindest abschnittweise mit einem aushärtbaren Matrixwerkstoff durchsetzt und anschließend dem Presswerkzeug zugeführt wird.

Des Weiteren betrifft die Erfindung eine Vorrichtung zum Handhaben einer einem Presswerkzeug zuzuführenden Faseranordnung, aufweisend eine Handhabungseinrichtung zum Zuführen der mit einem aushärtbaren Matrixwerkstoff durchsetzten Faseranordnung zu dem Presswerkzeug. Ferner betrifft die Erfindung eine Verwendung einer Vorrichtung zum Handhaben einer einem Presswerkzeug zuzuführenden Faseranordnung. US-B-7,354,540 zeigt einen bekannten Stand der Technik, von dem die vorliegende Erfindung ausgeht. Es ist bekannt, Bauteile, insbesondere Fahrzeugbauteile, durch das Pressen von mit einem aushärtbaren Matrixwerkstoff durchsetzten Faseranordnungen herzustellen. Da eine mit einem Matrixwerkstoff durchsetzte Faseranordnung nass sein kann, wird das Pressen einer solchen Faseranordnung mittels eines Presswerkzeugs auch als Nasspressen bezeichnet. Ein Matrixwerkstoff enthält üblicherweise eine Mischung aus einem Harz, einem Härter und einem Trennmittel. Eine Faseranordnung kann beispielsweise als Fasergelege, Faservlies, Fasergewebe, Fasergewirke oder dergleichen ausgebildet sein und kann mit einem aushärtbaren Matrixwerkstoff vorimprägniert sein.

Herkömmlich wird eine Faseranordnung zu ihrer Durchsetzung mit einem aushärtbaren Matrixwerkstoff auf eine horizontal ausgerichtete Auflagefläche aufgelegt, welche beispielsweise durch einen Auflagetisch gebildet sein kann. Auf eine auf eine solche Auflagefläche aufgelegte Faseranordnung wird üblicherweise von oben ein flüssiger Matrixwerkstoff aufgetragen, um die Faseranordnung mit Hilfe der Schwerkraft und Kapillareffekten mit dem flüssigen Matrixwerkstoff zu durchsetzen.

Bei einer derartigen Durchsetzung einer Faseranordnung mit einem flüssigen Matrixwerkstoff kommt es in der Regel dazu, dass ein Teil des die Faseranordnung durchsetzenden Matrixwerkstoffs in unmittelbaren Kontakt mit der Auflagefläche kommt, wodurch die Auflagefläche, insbesondere mit einer klebrigen Harzkomponente des flüssigen Matrixwerkstoffs, verunreinigt wird. Diese Problematik trifft insbesondere bei großen Bauteilen oder mehrschichtig aufgebauten Bauteilen auf. Alternativ kann auch eine vorgetränkte Faseranordnung verwendet werden, etwa ein Prepreg, was ebenfalls zu Verunreinigungen führen kann.

Daher ist man herkömmlich dazu übergegangen, zwischen einer Auflagefläche und einer auf der Auflagefläche aufliegenden Faseranordnung eine Schutzschicht anzuordnen, welche einen unmittelbaren Kontakt zwischen einem eine Faseranordnung durchsetzenden flüssigen Matrixwerkstoff und der Auflagefläche verhindert und somit die Auflagefläche vor Verunreinigungen mit dem flüssigen Matrixwerkstoff schützt. Eine herkömmliche Schutzschicht ist bahnförmig aus Papier oder einer Kunststofffolie ausgebildet.

Die Schutzschicht kann mit oder ohne die Ausbildung einer stoffschlüssigen Verbindung, insbesondere einer Verklebung, mit einer Auflagefläche auf die Auflagefläche aufgelegt werden. Anschließend kann eine Faseranordnung auf die Schutzschicht aufgelegt und mit einem flüssigen Matrixwerkstoff durchsetzt werden. Die Faseranordnung kann auch schon vorimprägniert sein. Nach dem Entfernen der durchsetzten Faseranordnung von der Schutzschicht bzw. dem Auflagetisch muss auch die mit dem Matrixwerkstoff verunreinigte Schutzschicht von der Auflagefläche entfernt werden, um eine reine Schutzschicht für eine weitere Faseranordnung auf die Auflagefläche auflegen zu können.

Zum Zuführen einer mit einem aushärtbaren Matrixwerkstoff durchsetzten Faseranordnung zu einem Presswerkzeug werden herkömmlich mechanische Greifer eingesetzt, welche an Randabschnitten der Faseranordnung angreifen. Um die Greifer nicht mit dem Matrixwerkstoff zu verunreinigen, werden die Randabschnitte der Faseranordnung üblicherweise nicht mit dem Matrixwerkstoff versehen. Die nicht mit dem Matrixwerkstoff versehenen bzw. durchsetzten Randabschnitte der Faseranordnung werden nach der Herstellung eines Bauteils durch Nasspressung von dem mit dem Matrixwerkstoff durchsetzten Abschnitt der Faseranordnung entfernt und als Abfall entsorgt.

Die US 5810 155 A sowie die WO 00/61475 A1 offenbaren Stand der Technik allgemein zur Verwendung der akustischen Levitation zum berührungslosen Transportieren von Gegenständen. Die US 5810 155 A offenbart eine Vorrichtung und ein Verfahren zur Levitation von Gegenständen sowie zu deren berührungslosem Transport. Es können ohne Einschränkungen der zu transportierenden Materialien, usw., Gegenstände von relativ großem Gewicht und Größe transportiert werden. Die Vorrichtung zeichnet sich durch eine kompakte Bauweise, geringe Kosten, gute Sicherheit und einfache Steuerbarkeit aus. Die WO 00/614175 A1 betrifft eine Vorrichtung zum berührungslosen Transport von Bauteilen, die entlang eines Transportweges zu kontaktieren empfindlich sind, wobei die Vorrichtung folgende Merkmale aufweist: Stationäre Schallerzeugungsmittel, um stationäre Schalldruckwellen zu erzeugen, die zum Halten der Bauteile in der Nähe der schallaussendenden Oberfläche der stationären Schallerzeugungseinrichtung in Schwebe geeignet sind; und Beschleunigungsmittel und/oder Beschleunigungsmaßnahmen, die eine Kraft auf das Bauteil bewirken, so dass sich das Bauteil entlang einer Wegstrecke bewegt. Die Wegstrecke wird dabei durch die räumlich-konstruktive Anordnung der Schallerzeugungsmittel vorbestimmt.

Aufgabe der Erfindung ist es, eine technische Möglichkeit zur einfachen und kostengünstigen Herstellung von Bauteilen aus mit aushärtbarem Matrixwerkstoff durchsetzten Faseranordnungen zu schaffen.

Diese Aufgabe wird durch ein Verfahren mit den Merkmalen gemäß Anspruch 1, eine Vorrichtung mit den Merkmalen gemäß Anspruch 5 und eine Verwendung mit den Merkmalen gemäß Anspruch 9 gelöst. Vorteilhafte Ausgestaltungen sind in den Unteransprüchen wiedergegeben, welche jeweils für sich genommen oder in verschiedener Kombinationen miteinander einen Aspekt der Erfindung darstellen können.

Erfindungsgemäß wird bei einem Verfahren der eingangs genannten Art die Faseranordnung mittels akustischer Levitation weitgehend berührungslos dem Presswerkzeug zugeführt. Damit wird vermieden, dass die mit dem aushärtbaren Matrixwerkstoff durchsetzte Faseranordnung mit der Auflagefläche in intensiven Kontakt kommt und diese stark verschmutzt. Besonders bevorzugt findet die Zuführung vollständig berührungslos statt, wobei zumindest die Auflagefläche nicht mit dem Matrixwerkstoff verschmutzt wird. Dabei können unmittelbar vor dem Zuführen mit Matrixwerkstoff durchsetzte Faseranordnungen oder vorimprägnierte Faseranordnungen, etwa Prepregs, verwendet werden.

Die berührungslose Handhabung der Faseranordnung nach dem erfindungsgemäßen Verfahren kann das ortsfeste Halten der Faseranordnung umfassen. Weiter kann es ein Bewegen der Faseranordnung umfassen. Solche Bewegungen können beispielsweise zur Zuführung der Faseranordnung zu einer Einrichtung zum zumindest abschnittweisen Durchsetzen der Faseranordnung mit einem flüssigen Matrixwerkstoff vor ihrer Zuführung zu dem Presswerkzeug dienen.

Vorzugsweise wird bei einem Verfahren der vorgenannten Art die Faseranordnung während ihrer Durchsetzung mit dem flüssigen Matrixwerkstoff mittels akustischer Levitation berührungslos gehandhabt.

Durch die berührungslose Handhabung der Faseranordnung mittels akustischer Levitation während ihrer Durchsetzung mit dem flüssigen Matrixwerkstoff wird verhindert, dass der flüssige Matrixwerkstoff in unmittelbaren Kontakt mit einem Bestandteil einer die Faseranordnung handhabenden Vorrichtung kommt und diesen Bestandteil verunreinigt. Hierdurch wird die herkömmliche Anordnung einer Schutzschicht zwischen der Faseranordnung und Bestandteilen einer die Faseranordnung handhabenden Vorrichtung, insbesondere einer Auflagefläche, überflüssig. Folglich entfallen bei dem erfindungsgemäßen Verfahren die Kosten für die Anschaffung und Entsorgung von herkömmlichen Schutzschichten. Zudem muss bei dem erfindungsgemäßen Verfahren keine Handhabung einer herkömmlichen Schutzschicht erfolgen. Hierdurch kann der technische Aufwand zur automatisierten Handhabung einer solchen Schutzschicht entfallen, was ebenfalls mit einer Reduzierung von Herstellungskosten bezüglich eines aus einer mit einem flüssigen Matrixwerkstoff durchsetzten Faseranordnung hergestellten Bauteils einhergeht.

Des Weiteren müssen an einer Umrandung einer Faseranordnung keine zusätzlichen Randabschnitte vorgesehen werden, die nicht mit einem flüssigen Matrixwerkstoff versehen werden und an denen mechanische Greifer zum Handhaben der Faseranordnung angreifen können, da die Handhabung der Faseranordnung berührungslos und ohne den Einsatz von mechanischen oder anderen Greifern erfolgen kann. Folglich können die Faseranordnungen ohne die herkömmlich vorhandenen Randabschnitte hergestellt werden, was mit einer Reduzierung des Materialaufwands und somit mit einer Reduzierung von Kosten verbunden ist. Auch müssen keine Randabschnitte nach einer Nasspressung von der übrigen Faseranordnung entfernt und als Abfall entsorgt werden, was ebenfalls mit einer Reduzierung von Kosten einhergeht.

Es hat sich gezeigt, dass die Durchsetzung einer Faseranordnung mit einem flüssigen Matrixwerkstoff durch die Einwirkung von Schallwellen, die die akustische Levitation hervorrufen, auf die Faseranordnung und den daran angeordneten flüssigen Matrixwerkstoff unterstützt wird, was das erreichbare Durchsetzungsergebnis insbesondere bezüglich einer homogenen Durchsetzung verbessern kann.

Zudem kann eine Durchsetzung nach dem erfindungsgemäßen Verfahren schneller als herkömmlich und damit kostengünstiger erfolgen, da ein flüssiger Matrixwerkstoff mit einer niedrigeren Viskosität verwendet werden kann, als es bei herkömmlichen Verfahren der Fall ist. Die Viskosität der bei herkömmlichen Verfahren eingesetzten flüssigen Matrixwerkstoffe ist nämlich möglichst gering zu wählen, um möglichst weitgehend zu verhindern, dass der flüssige Matrixwerkstoff durch die Faseranordnung hindurch auf eine Auflagefläche fließt und diese verunreinigt. Je größer die Viskosität eines flüssigen Matrixwerkstoffs ist, desto länger dauert es jedoch, ein gewünschtes Durchsetzungsergebnis zu erzielen.

Die Faseranordnung kann im Rahmen der Erfindung ein Fasergelege oder ein Fasergewirke oder dergleichen sein.

Nach einer weiteren vorteilhaften Ausgestaltung wird die akustische Levitation zur Ausbildung einer Nahfeldlevitation verwendet. Hierbei wird ein Luftpolster zwischen einer Schallwellen erzeugenden Einheit und der Faseranordnung aufgebaut, welches die Faseranordnung beabstandet zu dieser Einheit hält. Diese Ausgestaltung ist insbesondere dann sinnvoll, wenn sich die Schallwellen erzeugende Einheit während der Handhabung der Faseranordnung unterhalb der Faseranordnung befindet.

Die zur Levitation verwendeten Schallwellen sind vorzugsweise Ultraschallwellen. Die Frequenz der Ultraschallwellen ist in Abhängigkeit der Eigenschaften der berührungslos zu handhabenden Faseranordnung auszuwählen.

Eine weitere vorteilhafte Ausgestaltung sieht vor, dass die Faseranordnung während ihrer Durchsetzung mit dem flüssigen Matrixwerkstoff von einer ihrer beiden Großseiten aus mit Schallwellen beaufschlagt wird, während der flüssige Matrixwerkstoff von der jeweilig gegenüberliegenden Großseite auf die Faseranordnung aufgebracht wird. Hierdurch wird ein zwischen der Faseranordnung und einer Einheit zum Erzeugen von Levitationsschallwellen angeordnetes Schallwellenfeld nicht durch das Aufbringen des flüssigen Matrixwerkstoffs beeinträchtigt.

Erfindungsgemäß wird eine Vorrichtung der eingangs genannten Art vorgeschlagen, die eine Handhabungseinrichtung aufweist, die dazu eingerichtet ist, die mit dem aushärtbaren Matrixwerkstoff durchsetzte Faseranordnung mittels akustischer Levitation weitgehend berührungslos dem Presswerkzeug zuzuführen. Dadurch wird vorteilhaft eine Verschmutzung der Handhabungseinrichtung mit Matrixwerkstoff zumindest vermindert und vorzugsweise ganz vermieden. Die Handhabungseinrichtung kann dabei vorimprägnierte Faseranordnungen oder Faseranordnungen, die innerhalb der Handhabungseinrichtung mit Matrixwerkstoff durchsetzt werden, dem Presswerkzeug zuführen.

Vorzugsweise ist die Handhabungseinrichtung der Vorrichtung der eingangs genannten Art eingerichtet, die Faseranordnung zumindest während ihrer Durchsetzung mit dem flüssigen Matrixwerkstoff mittels akustischer Levitation weitgehend berührungslos zu halten.

Mit dieser Vorrichtung sind die oben mit Bezug auf das Verfahren genannten Vorteile entsprechend verbunden.

In einer vorteilhaften Ausführungsform ist die Handhabungseinrichtung eingerichtet, die mit dem flüssigen Matrixwerkstoff durchsetzte Faseranordnung mittels akustischer Levitation berührungslos dem Presswerkzeug zuzuführen. Auch hiermit sind die oben mit Bezug auf die entsprechende Ausgestaltung des Verfahrens verbundenen Vorteile verbunden.

Es wird weiter als vorteilhaft erachtet, wenn die Handhabungseinrichtung wenigstens eine mit einer Schwingungseinrichtung verbundene Sonotrode aufweist, mit der Nahfeldlevitationsschallwellen erzeugbar sind. Erfindungsgemäß wird eine Verwendung der eingangs genannten Art vorgeschlagen, bei der die Vorrichtung nach einer der vorgenannten Ausgestaltungen oder einer beliebigen Kombination derselben ausgebildet ist. Damit sind die oben mit Bezug auf die Vorrichtung bzw. das Verfahren genannten Vorteile entsprechend verbunden.

Weitere Einzelheiten, Merkmale und Vorteile der Erfindung ergeben sich aus der nachfolgenden Beschreibung und der Figur. Es zeigt:

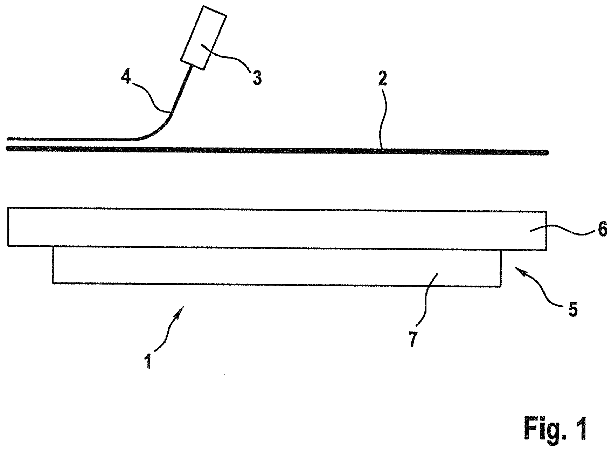

- Figur 1: eine schematische Darstellung eines Ausführungsbeispiels für eine erfindungsgemäße Vorrichtung.

Figur 1 zeigt eine schematische Darstellung eines Ausführungsbeispiels für eine erfindungsgemäße Vorrichtung 1 zum Handhaben einer einem nicht gezeigten Presswerkzeug zuzuführenden Faseranordnung 2.

Die Vorrichtung 1 umfasst eine Einrichtung 3 zum zumindest abschnittweisen Durchsetzen der Faseranordnung 2 mit einem flüssigen Matrixwerkstoff 4 vor ihrer Zuführung zu dem Presswerkzeug, wobei von der Einrichtung 3 lediglich eine Auftragsdüse dargestellt ist. Die Vorrichtung 1 weist des Weiteren eine Handhabungseinrichtung 5 zum Halten der Faseranordnung 2 während ihrer Durchsetzung mit dem flüssigen Matrixwerkstoff 4 und zum Zuführen der mit dem flüssigen Matrixwerkstoff 4 durchsetzten Faseranordnung 2 zu dem Presswerkzeug auf.

Die Handhabungseinrichtung 5 ist eingerichtet, die Faseranordnung 2 zumindest während ihrer Durchsetzung mit dem flüssigen Matrixwerkstoff 4 mittels akustischer Levitation berührungslos zu halten und die mit dem flüssigen Matrixwerkstoff 2 durchsetzte Faseranordnung 2 mittels akustischer Levitation berührungslos dem Presswerkzeug zuzuführen. Die Handhabungseinrichtung 5 weist eine Sonotrode 6 auf, mit der Nahfeldlevitationsschallwellen erzeugbar sind. Hierzu ist die Sonotrode 6 mit einer Schwingungseinrichtung 7 verbunden, welche elektronisch ansteuerbar ist.

Die mittels der Handhabungseinrichtung 5 erzeugbare akustische Levitation wird zur Ausbildung einer Nahfeldlevitation verwendet, wobei zwischen der Faseranordnung 2 und der Sonotrode 6 ein nicht näher dargestelltes Luftpolster ausgebildet wird, welches die Faseranordnung 2 beabstandet zu der Sonotrode 6 hält.

### Bezugszeichenliste:

- 1: Vorrichtung
- 2: Faseranordnung
- 3: Einrichtung
- 4: Flüssiger Matrixwerkstoff
- 5: Handhabungseinrichtung
- 6: Sonotrode
- 7: Schwingungseinrichtung

## Patentansprüche

1. Verfahren zum Handhaben einer einem Presswerkzeug zuzuführenden Faseranordnung (2), wobei die Faseranordnung (2) vor ihrer Zuführung zu dem Presswerkzeug zumindest abschnittweise mit einem aushärtbaren Matrixwerkstoff (4) durchsetzt und anschließend dem Presswerkzeug zugeführt wird, **dadurch gekennzeichnet, dass** die Faseranordnung (2) nach ihrer Durchsetzung mit dem Matrixwerkstoff (4) mittels akustischer Levitation weitgehend berührungslos dem Presswerkzeug zugeführt wird.

2. Verfahren nach Anspruch 1, **dadurch gekennzeichnet, dass** die Faseranordnung (2) während ihrer Durchsetzung mit dem flüssigen Matrixwerkstoff (4) mittels akustischer Levitation weitgehend berührungslos gehandhabt wird.

3. Verfahren nach Anspruch 1 oder 2, **dadurch gekennzeichnet, dass** die akustische Levitation zur Ausbildung einer Nahfeldlevitation verwendet wird.

4. Verfahren nach einem der vorhergehenden Ansprüche, **dadurch gekennzeichnet, dass** die Faseranordnung (2) während ihrer Durchsetzung mit dem Matrixwerkstoff (4) von einer ihrer beiden Großseiten aus mit Schallwellen beaufschlagt wird, während der Matrixwerkstoff (4) von der jeweilig gegenüberliegenden Großseite auf die Faseranordnung (2) aufgebracht wird.

5. Vorrichtung (1) zum Handhaben einer einem Presswerkzeug zuzuführenden Faseranordnung (2), aufweisend eine Handhabungseinrichtung (5) zum Zuführen einer mit aushärtbarem Matrixwerkstoff (4) durchsetzten Faseranordnung (2) zu dem Presswerkzeug, **dadurch gekennzeichnet,**
**dass** die Handhabungseinrichtung (5) eingerichtet ist, die mit dem aushärtbaren Matrixwerkstoff (4) durchsetzte Faseranordnung (2) mittels akustischer Levitation weitgehend berührungslos dem Presswerkzeug zuzuführen, und
**dass** sie eine Einrichtung (3) zum zumindest abschnittweisen Durchsetzen der Faseranordnung (2) mit einem aushärtbaren Matrixwerkstoff (4) vor ihrer Zuführung zu dem Presswerkzeug aufweist und die Handhabungseinrichtung (5) zum Halten der Faseranordnung (2) während ihrer Durchsetzung mit dem Matrixwerkstoff (4) eingerichtet ist.

6. Vorrichtung (1) nach Anspruch 5, **dadurch gekennzeichnet, dass** die Handhabungseinrichtung (5) eingerichtet ist, die Faseranordnung (2) zumindest während ihrer Durchsetzung mit dem Matrixwerkstoff (2) mittels akustischer Levitation weitgehend berührungslos zu halten.

7. Vorrichtung (1) nach Anspruch 5 oder 6, **dadurch gekennzeichnet, dass** die Handhabungseinrichtung (5) wenigstens eine mit einer Schwingungseinrichtung (7) verbundene Sonotrode (6) aufweist, mit der Nahfeldlevitationsschallwellen erzeugbar sind.

8. Verwendung einer Vorrichtung (1) nach einem der Ansprüche 5 bis 7 zum Handhaben einer zumindest abschnittweise mit einem aushärtbaren Matrixwerkstoff (4) durchsetzten, einem Presswerkzeug zuzuführenden Faseranordnung (2).

9. Verwendung nach Anspruch 9 der Vorrichtung (1) nach einem der Ansprüche 5 bis 7 zum Handhaben einer Faseranordnung (2) beim Durchsetzen mit dem Matrixwerkstoff (4).

## Claims

1. A method for handling a fibre arrangement (2) which is to be supplied to a compression mould, wherein the fibre arrangement (2), prior to being supplied to the compression mould, is interspersed at least in portions with a curable matrix material (4) and then is supplied to the compression mould, **characterised in that** the fibre arrangement (2), once it has been interspersed with the matrix material (4), is supplied to the compression mould in largely contact-free manner by means of acoustic levitation.

2. A method according to Claim 1, **characterised in that** the fibre arrangement (2), while it is being interspersed with the liquid matrix material (4), is handled in largely contact-free manner by means of acoustic levitation.

3. A method according to Claim 1 or Claim 2, **characterised in that** the acoustic levitation is used to create a near-field levitation.

4. A method according to one of the preceding claims, **characterised in that** the fibre arrangement (2), while it is being interspersed with the matrix material (4), is exposed to sound waves from one of its two large sides, while the matrix material (4) is applied to the fibre arrangement (2) from the respective opposite large side.

5. A device (1) for handling a fibre arrangement (2) which is to be supplied to a compression mould, having a handling means (5) for supplying a fibre arrangement (2) interspersed with curable matrix material (4) to the compression mould, **characterised in that**
the handling means (5) is set up to supply the fibre arrangement (2) interspersed with the curable matrix material (4) to the compression mould in largely contact-free manner by means of acoustic levitation, and
**in that** it has a means (3) for interspersing the fibre arrangement (2) at least in portions with a curable matrix material (4) prior to it being supplied to the compression mould, and the handling means (5) is set up to hold the fibre arrangement (2) while it is being interspersed with the matrix material (4).

6. A device (1) according to Claim 5, **characterised in that** the handling means (5) is set up to hold the fibre arrangement (2) in largely contact-free manner by means of acoustic levitation at least while it is being interspersed with the matrix material (2).

7. A device (1) according to Claim 5 or Claim 6, **characterised in that** the handling means (5) has at least one sonotrode (6) connected to a vibration means (7), with which sonotrode near-field levitation sound waves can be generated.

8. Use of a device (1) according to one of Claims 5 to 7 for handling a fibre arrangement (2) which is interspersed at least in portions with a curable matrix material (4) and is to be supplied to a compression mould.

9. Use according to Claim 8 of the device (1) according to one of Claims 5 to 7 for handling a fibre arrangement (2) while it is being interspersed with the matrix material (4).

## Revendications

1. Procédé de traitement d'une structure de fibres (2) devant alimenter un outil de moulage par compression, cette structure de fibres (2) étant chargée, avant son transfert à l'outil de moulage par compression au moins par segments d'un matériau de matrice durcissable (4) puis transféré à l'outil de moulage par compression,
**caractérisé en ce que**
la structure de fibres (2) est transférée, à l'outil de moulage par compression après avoir été chargée du matériau de matrice (4) essentiellement sans contact par lévitation acoustique.

2. Procédé conforme à la revendication 1,
**caractérisé en ce que**
la structure de fibres (2) est traitée essentiellement sans contact par lévitation acoustique pendant sa charge par le matériau de matrice fluide (4).

3. Procédé conforme à la revendication 1 ou 2,
**caractérisé en ce que**
la lévitation acoustique est utilisée pour former une lévitation à champ proche.

4. Procédé conforme à l'une des revendications précédentes,
**caractérisé en ce que**
pendant sa charge par le matériau de matrice (4), la structure de fibres (2) est soumise à des ondes acoustiques par l'une de ses faces principale alors que le matériau de matrice (4) est appliqué sur la structure de fibres (2) par sa face principale opposée.

5. Dispositif (1) permettant de traiter une structure de fibres (2) alimentant un outil de moulage de compression comportant un dispositif de traitement (5) permettant de transférer une structure de fibres (2) chargée d'un matériau de matrice durcissable (4) à l'outil de moulage par compression,
**caractérisé en ce que**
le dispositif de traitement (5) est réalisé pour permettre de transférer la structure de fibres (2) chargée du matériau de matrice durcissable (4), essentiellement sans contact à l'outil de moulage par compression par lévitation acoustique,
il comporte un dispositif (3) permettant de charger au moins par segments la structure de fibres (2) d'un matériau de matrice durcissable avant son transfert à l'outil de moulage par compression, et le dispositif de traitement (5) est susceptible de maintenir la structure de fibres (2) pendant sa charge par le matériau de matrice (4).

6. Dispositif (1) conforme à la revendication 5,
**caractérisé en ce que**
le dispositif de traitement (5) est susceptible de maintenir la structure de fibres (2) au moins pendant sa charge par le matériau de matrice (4) essentiellement sans contact par lévitation acoustique.

7. Dispositif (1) conforme à la revendication 5 ou 6,
**caractérisé en ce que**
le dispositif de traitement (5) comporte au moins une sonotrode (6) reliée à un dispositif générateur d'oscillations (7) permettant de générer des ondes acoustiques de lévitation à champ proche.

8. Utilisation d'un dispositif (1) conforme à l'une des revendications 5 à 7, pour traiter une structure de fibres (2) chargée au moins par segments d'un matériau de matrice durcissable (4) devant alimenter un outil de moulage par compression.

9. Utilisation conforme à la revendication 9 du dispositif (1) conforme à l'une des revendications 5 à 7, pour traiter une structure de fibres (2) pendant sa charge par le matériau de matrice (4).
